# EUROPÄISCHE PATENTANMELDUNG

(11) **EP 4 789 530 A1**
(43) Veröffentlichungstag der Anmeldung: **12.08.2026**
(21) Anmeldenummer: 26151994.6
(22) Anmeldetag: 15.01.2026
(51) Int. Cl.: A01D 78/10, A01B 79/00

(54) **ÜBERWACHUNGSSYSTEM FÜR EINEN KREISELSCHWADER**

(30) Priorität: 11.02.2025 DE 102025105009
(71) Anmelder: CLAAS Saulgau GmbH, 88340 Bad Saulgau (DE)
(72) Erfinder: Rupp, Magnus, 73494 Rosenberg (DE); Mock, Andreas, 88284 Wolpertswende (DE); Fischer, Josef, 88400 Biberach (DE); Speer, Christian, 78267 Aach (DE); Monkenbusch, Robin, 33378 Rheda-Wiedenbrück (DE); Schmitt, Mathias, 78576 Emmingen-Liptingen (DE); Spieler, Raphael, 88339 Bad Waldsee (DE); Frick, Clemens, 88356 Ostrach (DE)
(74) Vertreter: CLAAS Gruppe

(57) **Zusammenfassung**

Die vorliegende Erfindung betrifft ein Überwachungssystem (14) für einen Kreiselschwader (3) mit mindestens einem Schwadkreisel (4), der an Zinkenarmen (7) gelagerte Rechzinken (8) zur Erzeugung eines Schwads aus abgemähtem Erntegut aufweist, wobei das Überwachungssystem (14) eine Steuerungsvorrichtung (13) mit einer Benutzerschnittstelle (16) aufweist, welche zur Einstellung von Betriebsparametern (BP) des Kreiselschwaders (3) eingerichtet ist, wobei das Überwachungssystem (14) ein dem Kreiselschwader (3) zugeordnetes Sensorsystem (18) mit zumindest zwei Sensoren (19, 20) umfasst, welches dazu eingerichtet ist, den Betriebszustand wiedergebende physikalische Daten (PD) und Bilddaten (BD) des Kreiselschwaders (3) zu generieren und an die Steuerungsvorrichtung (13) zur Auswertung zu übertragen, wobei die Steuerungsvorrichtung (13) dazu eingerichtet ist, die physikalischen Daten (PD) und Bilddaten (BD) mittels eines Sensorfusionsmoduls (22) zu wenigstens einem Datensatz (23) zu fusionieren und mittels eines Verarbeitungsmoduls (24) aus dem wenigstens einen fusionierten Datensatz (23) zumindest eine den Betriebszustand und/oder das Arbeitsergebnis des Kreiselschwaders (3) charakterisierende Kenngröße (25) zu bestimmen.

## Beschreibung

Die vorliegende Erfindung betrifft ein Überwachungssystem für einen Kreiselschwader gemäß dem Oberbegriff des Anspruches 1. Weiterhin sind eine Kombination aus einer landwirtschaftlichen Arbeitsmaschine, insbesondere einem Traktor, und einem Kreiselschwader gemäß dem Anspruch 14 sowie ein Verfahren zum Überwachen des Betriebs eines Kreiselschwaders mittels eines Überwachungssystem gemäß dem Oberbegriff des Anspruches 15 Gegenstand der vorliegenden Erfindung.

Aus der EP 2 850 934 A2 ist ein Kreiselschwader bekannt, welcher mindestens einen Schwadkreisel umfasst, der an Zinkenarmen gelagerte Rechzinken zur Erzeugung eines Schwads aus abgemähtem Erntegut aufweist. Die Kreiselhöhe des oder jedes Schwadkreisels wird abhängig von mindestens einer messtechnisch erfassten Größe automatisch durch eine Steuerungseinrichtung als Teil eines Überwachungssystems einstellt, wobei als messtechnische Größen Feuchtigkeit und Schwadquerschnitt sowie Schwadbreite und Schwadhöhe durch jeweils einen Sensor erfasst werden. Die automatische Einstellung erfolgt dabei abhängig von der im Betrieb zu mindestens einem Schwad zusammengelegten Erntemasse. Alternativ sieht die EP 2 850 934 A2 vor, dass die Kreiselhöhe des oder jedes Schwadkreisels abhängig von einer sensorisch erfassten Fortbewegungsgeschwindigkeit und/oder Schwingungen im Rechzinken als mindestens einer messtechnisch erfassten Größe automatisch durch die Steuerungseinrichtung einstellt wird.

Die durch die Steuerungseinrichtung vorgenommene automatische Einstellung der Kreiselhöhe erfolgt ausschließlich in Abhängigkeit von Betriebsparametern des gemäß der EP 2 850 934 A2 ausgeführten Kreiselschwaders.

Ausgehend vom vorstehend genannten Stand der Technik liegt der Erfindung die Aufgabe zugrunde, ein Überwachungssystem für einen Kreiselschwader sowie ein Verfahren zum Überwachen des Betriebs eines Kreiselschwaders der eingangs genannten Art weiterzubilden, wodurch weitere Einflüsse, welche das Arbeitsergebnis des Schwadprozesses beeinflussen, erfasst und bei der Einstellung des Kreiselschwaders berücksichtigt werden.

Diese Aufgabe wird durch ein Überwachungssystem mit den Merkmalen des Anspruches 1 gelöst. Weiterhin wird die Aufgabe durch eine Kombination aus einer landwirtschaftlichen Arbeitsmaschine und einem Kreiselschwader mit den Merkmalen des Anspruches 14 sowie ein Verfahren zum Überwachen des Betriebs eines Kreiselschwaders mittels eines Überwachungssystems mit den Merkmalen des Anspruches 15 gelöst. Vorteilhafte Weiterbildungen sind Gegenstand der abhängigen Ansprüche.

Gemäß dem Anspruch 1 wird ein Überwachungssystem für einen Kreiselschwader mit mindestens einem Schwadkreisel vorgeschlagen. Der mindestens eine Schwadkreisel weist an Zinkenarmen gelagerte Rechzinken zur Erzeugung eines Schwads aus abgemähtem Erntegut auf. Das Überwachungssystem weist eine Steuerungsvorrichtung mit einer Benutzerschnittstelle auf, welche zur Einstellung von Betriebsparametern des Kreiselschwaders eingerichtet ist. Erfindungsgemäß ist vorgesehen, dass das Überwachungssystem ein dem Kreiselschwader zugeordnetes Sensorsystem mit zumindest zwei Sensoren umfasst, welches dazu eingerichtet ist, den Betriebszustand wiedergebende physikalische Daten und Bilddaten des Kreiselschwaders zu generieren und an die Steuerungsvorrichtung zur Auswertung zu übertragen, wobei die Steuerungsvorrichtung dazu eingerichtet ist, die physikalischen Daten und Bilddaten mittels eines Sensorfusionsmoduls zu wenigstens einem Datensatz zu fusionieren und mittels eines Verarbeitungsmoduls aus dem wenigstens einen fusionierten Datensatz zumindest eine den Betriebszustand und/oder das Arbeitsergebnis des Kreiselschwaders charakterisierende Kenngröße zu bestimmen.

Wesentlich ist die Überlegung, dass durch die Fusionierung von sensorisch erfassten physikalischen Daten und Bilddaten sowie der aus deren Verarbeitung resultierenden Bestimmung der zumindest einen den Betriebszustand und/oder das Arbeitsergebnis des Kreiselschwaders charakterisierenden Kenngröße, die Bewertung des Betriebs und/oder des Arbeitsergebnisses des Kreiselschwaders optimiert wird, wodurch eine präzisere Einstellung des Kreiselschwaders im Betrieb unter Berücksichtigung von bestehenden Umgebungs- und/oder Umweltbedingungen sowie alternativ oder zusätzlich sonstiger, beispielsweise betriebswirtschaftlicher, Randbedingungen möglich wird.

Das Sensorfusionsmodul ist dazu eingerichtet ist, die erfassten physikalischen Daten und Bilddaten zeitlich und räumlich korrelierend zu fusionieren.

Der Begriff Betriebsparameter des Kreiselschwaders bezeichnet alle voreinzustellenden Parameter für den Betrieb des Kreiselschwaders, die zur Erzeugung eines Schwads aus abgemähtem Erntegut erforderlich sind. Die Betriebsparameter des Kreiselschwaders sind insbesondere pneumatisch, hydraulisch mechanisch und/oder elektromechanisch einstellbar.

Insbesondere können die physikalischen Daten aus der Gruppe Akustikdaten, Schwingungsdaten und/oder Drehmomentdaten sein, zu deren Erfassung das Sensorsystem eingerichtet und ausgeführt ist.

Weiter bevorzugt können die physikalischen Daten aus der Gruppe Druckdaten, Neigungswinkeldaten und/oder Bewegungsdaten des Kreiselschwaders sein, zu deren Erfassung das Sensorsystem eingerichtet und ausgeführt ist. Zu den sensorisch erfassten Bewegungsdaten des Kreiselschwaders können insbesondere Drehzahl, Umfangsgeschwindigkeit und/oder Fahrgeschwindigkeit zählen.

Das Sensorsystem umfasst mehrere unterschiedliche Sensoren, die zur Erfassung der physikalischen Daten ausgeführt und eingerichtet sind. Die Sensoren können beispielsweise als Drehmomentsensor, Drehzahlsensor, Schwingungssensor, Näherungssensor, Kraftsensor, Beschleunigungssensor, akustischer Sensor, Positionsortungssensor und/oder Feuchtigkeitssensor ausgeführt sein.

Beispielsweise kann mittels eines oder mehrerer Näherungssensoren ein Durchbiegen der Zinkenarme erfasst werden. Dadurch kann, vorzugsweise in Verbindung mit weiteren physikalischen Daten, auf den Durchsatz an Erntegut geschlossen werden. Ein weiterer Aspekt besteht darin, ein Bodeneinstechen zu detektieren.

Eine Kombination von physikalischen Daten, die von einem Drehmomentsensor des Schwadkreisel sowie einem Feuchtigkeitssensor zur Bestimmung der Feuchtigkeit des zu bearbeitenden Erntegutes erfasst werden, lassen sich Anomalien beim Schwaden erkennen, auf die mit einer Anpassung der Rechhöhe reagiert werden kann.

Eine Kombination von physikalischen Daten, die beispielsweise vom Drehmomentsensor des Schwadkreisel und dem Näherungssensor erfasst werden, lassen Rückschlüsse auf die Kreiselhöhe zu, insbesondere ob die Kreiselhöhe zu gering eingestellt ist.

Alternativ oder zusätzlich kann mittels eines akustischen Sensors die eingestellte Kreiselhöhe überwacht werden. So kann ein durch Berührung der Rechzinken mit der Oberfläche des Bodens erzeugtes Geräusch, z.B. Bodenkratzen, erfasst werden, was auf eine zu tief gewählte Einstellung des Schwadkreisels oder der Schwadkreisel schließen lässt.

Insbesondere können die Bilddaten Aufnahmen des Kreiselschwaders, Komponenten des Kreiselschwaders und/oder des vom Kreiselschwader bearbeiteten Erntegutes umfassen, welche das Sensorsystem vor, während und/oder nach der Bearbeitung durch den Kreiselschwader generiert.

So umfasst das Sensorsystem zumindest eine Kamera, vorzugsweise umfasst das Sensorsystem mehrere Kameras, die zur Generierung von Bilddaten des Kreiselschwaders, von einzelnen Komponenten des Kreiselschwaders und/oder des vom Kreiselschwader bearbeiteten Erntegutes ausgeführt und eingerichtet ist bzw. sind. Hierdurch lässt sich beispielsweise ergänzend das Durchbiegen von Zinkenarmenerfassen oder das Bodeneinstechen optisch erfassen.

Weiter bevorzugt kann das Verarbeitungsmodul in der Steuerungsvorrichtung hinterlegte oder hinterlegbare geometrische Daten des Kreiselschwaders berücksichtigen. Zu den geometrischen Daten können Arbeitsbreite, Anzahl der Schwadkreisel, Durchmesser der Schwadkreisel, Anzahl und Form der Rechzinken und dergleichen gehören.

Gemäß einer Weiterbildung kann die zumindest eine zu bestimmende Kenngröße ein Verschmutzungsgrad des Erntegutes, ein Räumgrad des Erntegutes, ein Grasnabenzustand und/oder ein Verschleißzustand des Kreiselschwaders oder seiner Komponenten sein.

Die Kenngröße Verschmutzungsgrad gibt Aufschluss über den Gehalt an erdigen Verunreinigungen im Erntegut, die durch einen zu tief eingestellten Schwadkreisel eingebracht werden.

Die Kenngröße Räumgrad kann Aufschluss über den Anteil an gemähtem Erntegut geben, welches durch den Kreiselschwader nicht zum Schwad zusammengeführt wurde.

Die Kenngröße Grasnabenzustand, die bevorzugt von einem als Kamera ausgeführtem Sensor des Sensorsystems erfasst wird, kann dazu verwendet werden, einen Hinweis auf eine erforderliche Nachsaat zu geben.

Die Kenngrößen Verschmutzungsgrad, Räumgrad sowie Grasnabenzustand können das Arbeitsergebnis sowie den Betriebszustand des Kreiselschwaders charakterisieren.

Mittels der zumindest einen Kamera des Sensorsystems lässt sich beispielsweise das Brechen oder der Verlust eines Rechzinkens erfassen und dokumentieren, was der Kenngröße Verschleißzustand des Kreiselschwaders oder seiner Komponenten zugeordnet sein kann.

Alternativ oder zusätzlich kann durch eine Überwachung des Drehmoments zum Antreiben des jeweiligen Schwadkreisels auf das Abbrechen von Rechzinken und/oder den Verlust eines oder mehrerer Rechzinken geschlossen werden. Hierzu kann das Auftreten einer Unwucht als Indikator für den Verlust herangezogen werden.

Mittels einer weiteren Kamera, die einen hinter dem Anbaugerät befindlichen Bereich erfasst, lässt sich erkennen, ob Erntegut von den Rechzinken des Schwadkreisel nicht erfasst und zum Schwad zusammengeführt wurde. Dies ermöglicht den Rückschluss auf eine zu hoch eingestellte Kreiselhöhe, was zum Auftreten von Erntegut- bzw. Futtermittelverlusten führt.

Die Kenngröße Verschleißzustand des Kreiselschwaders oder seiner Komponenten kann den Betriebszustand des Kreiselschwaders charakterisieren.

Bevorzugt kann die zumindest eine zu bestimmende Kenngröße mittels der mit der Steuerungsvorrichtung verbundenen Benutzerschnittstelle auswählbar und/oder vorgebbar sein. Die zumindest eine Kenngröße kann hierzu aus einer auswählbaren und/oder vorgebbaren Arbeitsstrategie abgeleitet werden. Als Arbeitsstrategie kann beispielsweise eine Optimierung der Bearbeitungsleistung, der Bearbeitungseffizienz und/oder der Bearbeitungsqualität vorgegeben bzw. ausgewählt werden.

Die Steuerungsvorrichtung kann ein Bildauswertungsmodul aufweisen, welches dazu eingerichtet ist, die Bilddaten mittels eines Maschinenlernalgorithmus zu analysieren. Die Verwendung des Bildauswertungsmoduls stellt eine Möglichkeit dar, kostengünstig einen Verunreinigungsgrad des Erntegutes zu qualifizieren und/oder zu quantifizieren. Insbesondere kann die Analyse in Echtzeit durchgeführt werden. Es können unterschiedliche Verunreinigungsgrade des Erntegutes definiert sein, welche vom Massegehalt an, insbesondere anorganischen, Verunreinigungen in der Trockenmasse des Erntegutes abhängig sind. Verunreinigungen, insbesondere anorganische Verunreinigungen, sind Sand, erdige Bestandteile wie Humus oder sonstige Bodenbestandteile. Dabei kann bevorzugt zwischen mehreren Verunreinigungsgraden unterschieden werden, die sich aus dem Verhältnis von Massegehalt anorganischer Verunreinigungen zur Trockenmasse des Erntegutes ergeben. Insbesondere wird mittels des Maschinenlernalgorithmus der Sandgehalt, der Anteil an erdigen Bestandteilen und/oder ein sonstiger für Bodenmaterial repräsentativer Indikator als Verunreinigung im Erntegut bestimmt, um den Verunreinigungsgrad zu qualifizieren.

Bevorzugt kann der Maschinenlernalgorithmus zumindest ein trainierbares neuronales Netzwerk zur Analyse der Bilddaten umfassen.

Gemäß einer bevorzugten Weiterbildung kann die Steuerungsvorrichtung dazu eingerichtet sein, basierend auf der zumindest einen bestimmten Kenngröße zumindest eine Einstellempfehlung für den Betrieb des Kreiselschwaders zu generieren. Die zumindest eine Einstellempfehlung kann beispielsweise die Anpassung der Rechhöhe respektive Kreiselhöhe, eine Anpassung der Neigung der Schwadkreisel, eine Anpassung des Auflagedrucks der Schwadkreisel, eine Anpassung der Fahrgeschwindigkeit einer landwirtschaftlichen Arbeitsmaschine, an welche der Kreiselschwader adaptiert ist und von welcher der Kreiselschwader angetrieben wird, als einstellbare Betriebsparameter betreffen.

Eine weitere Einstellempfehlung kann im Vorschlag des Austauschens eines verschlissenen oder Ersetzens eines verlorenen Rechzinkens bestehen. Weiterhin kann, wie weiter oben bereits angeführt, eine Nachsaat empfohlen werden, wenn die Kenngröße Grasnabenzustand dies indiziert. Gemäß einer bevorzugten Weiterbildung kann dazu vorgesehen sein, die Nachsaat durch den Kreiselschwader selbst unmittelbar nach der Schwadbildung durchzuführen.

Insbesondere kann die Steuerungsvorrichtung dazu eingerichtet sein, die zumindest eine Einstellempfehlung mittels der Benutzerschnittstelle auszugeben.

Dabei kann die Steuerungsvorrichtung dazu eingerichtet sein, eine auf der zumindest einen Einstellempfehlung basierende Einstellung dialogbasierend durch einen manuellen Eingriff eines Bedieners des Kreiselschwaders oder automatisch durch die Steuerungsvorrichtung umzusetzen.

Des Weiteren kann die Steuerungsvorrichtung dazu eingerichtet sein, in Abhängigkeit von der Einstellempfehlung die vorzunehmende Einstellung dialogbasierend in Interaktion mit dem Bediener durchzuführen. Bei einem manuellen Eingreifen durch den Bediener kann die Steuerungsvorrichtung dialogbasierend mit diesem interagieren, um die zumindest eine Einstellempfehlung umzusetzen. Dabei können dem Bediener zusätzliche Hinweise mittels der Benutzerschnittstelle ausgegeben werden, welche zumindest eine den Betriebszustand und/oder das Arbeitsergebnis des Kreiselschwaders charakterisierende Kenngröße zu der zumindest einen Einstellempfehlung geführt hat.

Bevorzugt kann die Steuerungsvorrichtung dazu eingerichtet sein, mittels des Sensorsystems erfasste physikalische Daten und/oder Bilddaten georeferenziert abzuspeichern. Dies erlaubt beispielsweise das Auffinden eines abgebrochenen Rechzinkens im Schwad oder das Kartographieren von Bereichen, in denen eine Nachsaat notwendig ist.

Die eingangs gestellte Aufgabe wird weiterhin durch eine Kombination aus einer landwirtschaftlichen Arbeitsmaschine, insbesondere einem Traktor, und einem Kreiselschwader gelöst, wobei die Kombination ein Überwachungssystem zur Überwachung des Betriebs des Kreiselschwaders nach einem der Ansprüche 1 bis 13 aufweist. Auf alle Ausführungen zu dem erfindungsgemäßen Überwachungssystem, die geeignet sind, die landwirtschaftliche Kombination insgesamt zu erläutern, darf verwiesen werden.

Nach einer weiteren Lehre gemäß Anspruch 15, der eigenständige Bedeutung zukommt, wird ein Verfahren zum Überwachen des Betriebs eines Kreiselschwaders mittels eines Überwachungssystems vorgeschlagen, wobei der Kreiselschwader mindestens einen Schwadkreisel umfasst, welcher an Zinkenarmen gelagerte Rechzinken zur Erzeugung eines Schwads aus abgemähtem Erntegut aufweist, wobei das Überwachungssystem mit einer Steuerungsvorrichtung und einer Benutzerschnittstelle ausgeführt ist, mittels der Betriebsparameter des Kreiselschwaders eingestellt werden, wobei durch eine dem Kreiselschwader zugeordnete, zumindest zwei Sensoren aufweisendes Sensorsystem den Betriebszustand wiedergebende physikalische Daten und Bilddaten des Kreiselschwaders generiert und an die Steuerungsvorrichtung zur Auswertung übertragen werden, wobei die physikalischen Daten und Bilddaten mittels eines Sensorfusionsmoduls der Steuerungsvorrichtung zu wenigstens einem Datensatz fusioniert werden und mittels eines Verarbeitungsmoduls der Steuerungsvorrichtung aus dem wenigstens einen fusionierten Datensatz zumindest eine den Betriebszustand und/oder das Arbeitsergebnis des Kreiselschwaders charakterisierende Kenngröße bestimmt wird.

Die vorliegende Erfindung wird nachstehend anhand eines in den Zeichnungen dargestellten Ausführungsbeispieles näher erläutert.

Es zeigen:
- Fig. 1: schematisch und exemplarisch eine Kombination aus einer landwirtschaftlichen Arbeitsmaschine und einem Kreiselschwader;
- Fig. 2: schematisch und exemplarisch eine Draufsicht auf einen Schwadkreisel des Kreiselschwaders; und
- Fig. 3: schematisch und exemplarisch eine Darstellung eines Überwachungssystems für den Kreiselschwader.

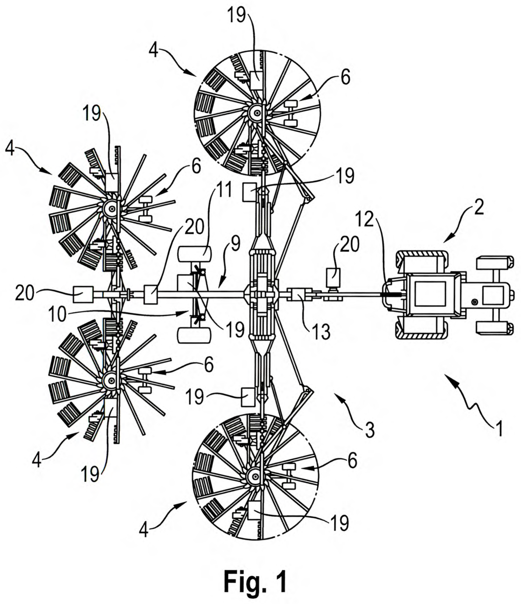

In Fig. 1 ist schematisch und exemplarisch eine Kombination 1 aus einer landwirtschaftlichen Arbeitsmaschine 2, insbesondere einem Traktor, und einem an die Arbeitsmaschine 2 gekoppelten Kreiselschwader 3. Der Kreiselschwader 3 ist hier und vorzugsweise als ein Vierkreiselschwader ausgeführt. Der Kreiselschwader 3 weist vier Schwadkreisel 4 auf, die zur Mittenablage eines aus abgemähten Futtererntegut erzeugten Schwads ausgeführt und eingerichtet sind. Die Arbeitsmaschine 2 treibt den Kreiselschwader 3 mechanisch und/oder hydraulisch an. Ein mechanischer Abtrieb 12 der Arbeitsmaschine 2 ist bevorzugt als Zapfwelle ausgeführt, wie in Fig. 1 angedeutet.

Der Kreiselschwader 3 kann auch als ein Einkreiselschwader mit genau einem Schwadkreisel 4 zur Seitenablage eines aus dem abgemähten Futterernteguts erzeugten Schwads, als ein Zweikreiselschwader mit genau zwei Schwadkreiseln 4 oder als ein Sechskreiselschwader mit genau sechs Schwadkreiseln 4 ausgeführt sein.

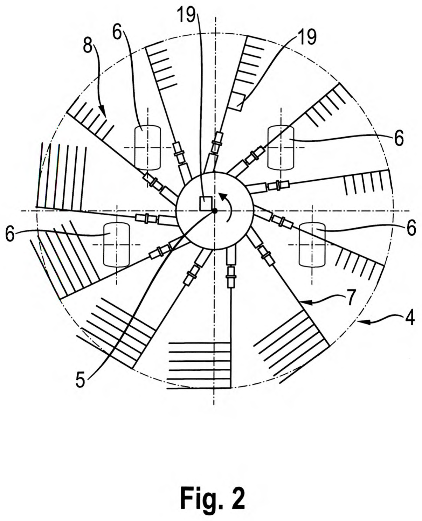

Die Darstellung in Fig. 2 zeigt schematisch und exemplarisch eine Draufsicht auf einen der Schwadkreisel 4 des Kreiselschwaders 3. Der Schwadkreisel 4 rotiert um eine vertikale Kreiselachse 5. Der um die Kreiselachsen 5 umlaufend angetriebene Schwadkreisel 4 stützt sich in der Arbeitsstellung mittels Tast- und Stützrädern 6 am Boden ab. Der Schwadkreisel 4 weist horizontal verlaufende Zinkenarme 7 auf, an welchen jeweils mehrere Rechzinken 8 schwenkbar gelagert angeordnet sind. Die Zinkenarme 7 erstrecken sich dabei im Wesentlichen in radialer Richtung lotrecht zur Kreiselachse 5, insbesondere jedoch unter einem tangentialen Anstellwinkel nach außen.

Die Schwadkreisel 4 des als Vierkreiselschwader ausgeführten Kreiselschwaders 3 sind an einem Maschinengestell 9 angeordnet. Am Maschinengestell 9 ist ein Fahrgestell 10 mit Laufrädern 11 angeordnet.

Jeder Schwadkreisel 4 des Kreiselschwaders 3 umfasst eine im Detail nicht gezeigte Verstelleinrichtung, mit Hilfe derer im Betrieb eine sogenannte Kreiselhöhe des jeweiligen Schwadkreisels 4 eingestellt werden kann, um im Betrieb den Abstand der Rechzinken 8 zum Boden einzustellen. Die Verstelleinrichtungen der Schwadkreisel 4 werden dabei von einer Steuerungseinrichtung 13 des Kreiselschwaders 3 angesteuert.

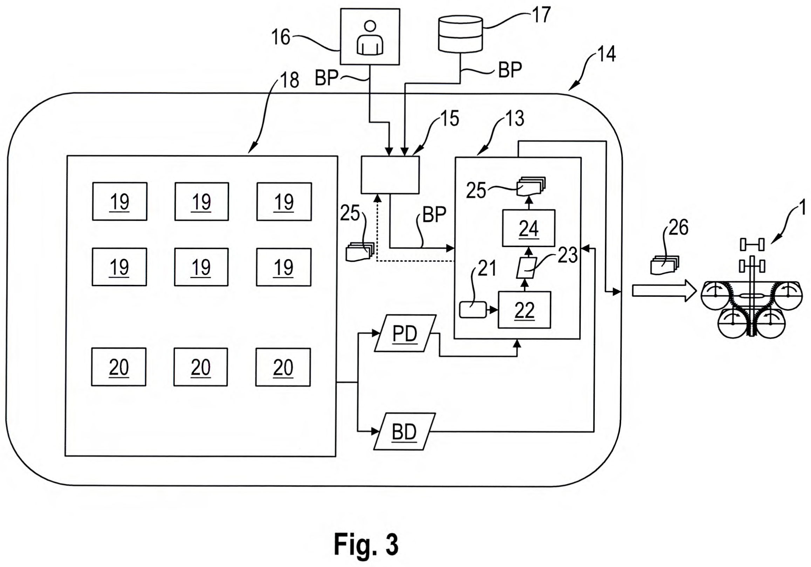

In Fig. 3 ist schematisch und exemplarisch eine Darstellung eines Überwachungssystems 14 für den Kreiselschwader 2 gezeigt. Das Überwachungssystem 14 umfasst die Steuerungsvorrichtung 13 mit einer Benutzerschnittstelle 15. Die Benutzerschnittstelle 15 ist zur Einstellung von vorzugebenden Betriebsparametern BP des Kreiselschwaders 3 durch einen Bediener 16 der Kombination 1 eingerichtet. Die Einstellung der Betriebsparameter BP durch den Bediener 16 kann durch die Auswahl hinterlegter oder hinterlegbarer Betriebsparameter BP und/oder die Eingabe von Betriebsparameter BP mittels der Benutzerschnittstelle 15 erfolgen. Zusätzlich oder alternativ können Betriebsparameter BP aus einer entfernten Datenquelle 17 abgerufen werden.

Im laufenden Betrieb des Kreiselschwaders 3 können Umstände auftreten, welche dazu führen können, dass das mit den durch den Bediener 16 eingestellten Betriebsparametern BP erreichbare Arbeitsergebnis vom optimalen Arbeitsergebnis signifikant abweicht.

So können Umstände, welche des Arbeitsergebnis des Schwadprozesses beeinflussen, beispielsweise der Verlust von Rechzinken 8, Verunreinigungen im gebildeten Schwad durch eine zu niedrig eingestellte Kreiselhöhe oder Rechverluste aufgrund einer zu hoch eingestellten Kreiselhöhe sein.

Um das Auftreten von das aufgrund der vorgegebenen Betriebsparameter BP erreichbare Arbeitsergebnis beeinflussenden Umständen zu erkennen und darauf angemessen reagieren zu können, ist das Überwachungssystem 14 zur Überwachung des Betriebs des Kreiselschwaders 3 vorgesehen.

Das Überwachungssystem 14 umfasst ein dem Kreiselschwader 3 zugeordnetes Sensorsystem 18 mit zumindest einem Sensor 19 sowie zumindest einem als Kamera 20 ausgeführten Sensor. Der zumindest eine Sensor 19 und die zumindest eine Kamera 20 des Sensorsystems 18 sind dazu eingerichtet, den Betriebszustand wiedergebende physikalische Daten PD und Bilddaten BD des Kreiselschwaders 3 zu generieren und an die Steuerungsvorrichtung 13 zur Auswertung zu übertragen. Der zumindest eine Sensor 19 weist eine Sensortechnologie auf, welche die Detektion der den Betriebszustand wiedergebenden physikalischen Daten PD des Kreiselschwaders 3 ermöglicht. Der zumindest eine als Kamera 20 ausgeführte Sensor dient der optischen Erfassung des Kreiselschwaders 3 sowie des Arbeitsergebnisses in Form des Schwads, wodurch den Betriebszustand wiedergebende Bilddaten BD des Kreiselschwaders 3 bereitgestellt werden.

Die Steuerungsvorrichtung 13 umfasst ein Bildauswertungsmodul 21, welches dazu eingerichtet ist, die Bilddaten BD mittels eines Maschinenlernalgorithmus zu analysieren. Die Verwendung des Bildauswertungsmoduls 21 stellt eine Möglichkeit dar, kostengünstig einen Verunreinigungsgrad des Erntegutes zu qualifizieren und/oder zu quantifizieren. Insbesondere kann die Analyse in Echtzeit durchgeführt werden. Bevorzugt kann der Maschinenlernalgorithmus zumindest ein trainierbares neuronales Netzwerk zur Analyse der Bilddaten BD umfassen.

Um die physikalischen Daten PD und Bilddaten BD des Kreiselschwaders 3 auszuwerten, ist die Steuerungsvorrichtung 13 dazu eingerichtet, die physikalischen Daten PD und Bilddaten BD mittels eines Sensorfusionsmoduls 22 zu wenigstens einem Datensatz 23 zu fusionieren und mittels eines Verarbeitungsmoduls 24 aus dem wenigstens einen fusionierten Datensatz 23 zumindest eine den Betriebszustand und/oder das Arbeitsergebnis des Kreiselschwaders 3 charakterisierende Kenngröße 25 zu bestimmen. Hierzu werden die durch das Bildauswertungsmodul 21 analysierten Bilddaten BD an das Sensorfusionsmoduls 22 übertragen.

Das Sensorsystem 18 umfasst zumindest einen Sensor 19, vorzugsweise mehrere Sensoren 19, um physikalische Daten PD aus der Gruppe Akustikdaten, Schwingungsdaten und/oder Drehmomentdaten zu detektieren. Weiterhin können die physikalischen Daten PD aus der Gruppe Druckdaten, Neigungswinkeldaten und/oder Bewegungsdaten des Kreiselschwaders 3 sein. Zu den Bewegungsdaten des Kreiselschwaders 3 gehören beispielsweise Drehzahl, Umfangsgeschwindigkeit und/oder Fahrgeschwindigkeit.

Der Bediener der Kombination 1 kann am als Zapfwelle ausgeführten mechanischen Abtrieb 12 eine minimale und eine maximale Zapfwellendrehzahl einstellen sowie einen Fahrgeschwindigkeitsbereich vorgeben, innerhalb dessen die Zapfwellendrehzahl permanent an die Fahrgeschwindigkeit angepasst wird. Die kontinuierliche Anpassung der Zapfwellendrehzahl an die Fahrgeschwindigkeit erfolgt, um eine saubere Recharbeit und ein gleichmäßiges Schwad zu gewährleisten, was das Arbeitsergebnis des Kreiselschwaders 3 mitbestimmt.

Zumindest ein Sensor 19 des Sensorsystem 18 erfasst hierzu die Zapfwellendrehzahl als physikalische Daten PD und ein weiterer Sensor 19 erfasst die Fahrgeschwindigkeit als physikalische Daten PD.

Des Weiteren umfasst das Sensorsystem 18 zumindest eine Kamera 20, vorzugsweise mehrere Kameras 20, um Bilddaten BD zu generieren, die Aufnahmen des Kreiselschwaders 3, seiner Komponenten, beispielsweise der Rechzinken 8, und/oder des vom Kreiselschwader 3 bearbeiteten Erntegutes wiedergeben. Die Bilddaten BD werden durch das Sensorsystem 18 vor, während und/oder nach der Bearbeitung des Erntegutes durch den Kreiselschwader 3 generiert. Hierzu sind die Kameras 20 an verschiedenen Stellen des Kreiselschwaders 3 angeordnet, um die Aufnahmen des Kreiselschwaders 3, seiner Komponenten und/oder des vom Kreiselschwader 3 bearbeiteten Erntegutes generieren zu können. Insbesondere das vom Kreiselschwader 3 bearbeitete Erntegut, welches als Schwad zusammengerecht wird, wird durch eine hierfür im rückwärtigen am Kreiselschwader 3 angeordnete Kamera 20 erfasst, um durch die Auswertung der Bilddaten BD das Arbeitsergebnis zu bestimmen.

Die in den Fig. 1 und 2 schematisch und exemplarisch dargestellte Positionierung der Sensoren 19 bzw. Kameras 20 des Sensorsystems 18 dient lediglich der Veranschaulichung und kann von den tatsächlichen Positionen und/oder ihrer Anzahl am Kreiselschwader 3 abweichen.

Darüber hinaus kann das Verarbeitungsmodul 24 in der Steuerungsvorrichtung 13 hinterlegte oder hinterlegbare geometrische Daten des Kreiselschwaders 3 bei der Bestimmung der zumindest einen Kenngröße 25 berücksichtigen. Geometrische Daten des Kreiselschwaders 3 können hierzu mittels der Benutzerschnittstelle 15 durch den Bediener 16 eingegeben oder aus der entfernten Datenquelle 17 abgerufen werden. Weiterhin ist es denkbar, dass geometrische Daten des Kreiselschwaders 3 über ein Bussystem, welches die Steuerungsvorrichtung 13 des Kreiselschwaders 3 und die Arbeitsmaschine 2 signaltechnisch verbindet, aus einem Datenspeicher des Kreiselschwaders 3 abrufbar sind.

Die zumindest eine zu bestimmende Kenngröße 25 ist ein Verschmutzungsgrad des Erntegutes, ein Räumgrad des Erntegutes, ein Grasnabenzustand und/oder ein Verschleißzustand des Kreiselschwaders 3 oder seiner Komponenten.

Der Verschmutzungsgrad als Kenngröße 25 gibt Aufschluss über den Gehalt an erdigen Verunreinigungen im Erntegut, die durch einen zu tief eingestellten Schwadkreisel 3 eingebracht werden. Erdige Verunreinigungen im Erntegut können aber auch auf einen dem Schwaden vorangehenden Prozess, beispielsweise das Mähen oder Wenden, oder Umwelteinflüsse wie Starkregen zurückgehen. Erdige Verunreinigungen im Erntegut beeinflussen wesentlich die Qualität des als Futter für Tiere verwendeten Erntegutes.

Der Räumgrad als Kenngröße 25 kann Aufschluss über den Anteil an gemähtem Erntegut geben, welches durch den Kreiselschwader 3 nicht zum Schwad zusammengeführt wurde. Hierfür ursächlich kann ein zu hoch eingestellter Schwadkreisel 3 sein.

Der Grasnabenzustand als Kenngröße 25, die von der zumindest einen Kamera 20 des Sensorsystems 18 erfasst wird, kann dazu verwendet werden, einen Hinweis auf eine erforderliche Nachsaat zu geben. Hierzu ist die zumindest eine Kamera 20 im rückwärtigen Bereich des Kreiselschwaders 3 angeordnet, sodass die Grasnabe nach dem Schwaden optisch erfasst wird.

Mittels der zumindest einen Kamera 20 des Sensorsystems 18 lässt sich beispielsweise das Brechen oder der Verlust eines Rechzinkens 8 erfassen und dokumentieren, was der Kenngröße 25 Verschleißzustand des Kreiselschwaders 3 oder seiner Komponenten zugeordnet sein kann. Das Brechen oder der Verlust eines Rechzinkens 8 beeinflusst zum einen die Qualität des Arbeitsergebnisses. Zum anderen kann es bei dem nachfolgenden Prozess der Aufnahme des Schwads durch eine Erntemaschine, beispielsweise einen Feldhäcksler oder eine Ballenpresse, zu Beschädigungen an dieser kommen, wenn der Rechzinken 8 oder Teile hiervon aufgenommen werden. Eine weitere Gefahr von Teilen im Erntegut besteht bei der Verwendung des Erntegutes als Futter für Tiere.

Beispielsweise kann mittels eines oder mehrerer als Näherungssensoren ausgeführten Sensoren 19 ein Durchbiegen der Zinkenarme 7 erfasst werden. Dadurch kann, vorzugsweise in Verbindung mit weiteren physikalischen Daten PD, auf den Durchsatz an Erntegut geschlossen werden. Ein weiterer Aspekt kann darin bestehen, ein Bodeneinstechen der Rechzinken 8 zu detektieren, was auf eine zu gering eingestellte Kreiselhöhe zurückzuführen ist.

Eine Kombination von physikalischen Daten PD, die von einem als Drehmomentsensor ausgeführten Sensor 19 des Schwadkreisel 3 sowie einem als Feuchtigkeitssensor ausgeführten Sensor 19 zur Bestimmung der Feuchtigkeit des zu bearbeitenden Erntegutes erfasst werden, lassen sich Anomalien beim Schwaden erkennen, auf die mit einer Anpassung der Rechhöhe reagiert werden kann.

Eine Kombination von physikalischen Daten PD, die beispielsweise vom Drehmomentsensor des Schwadkreisel 3 und dem Näherungssensor erfasst werden, lassen Rückschlüsse auf die Kreiselhöhe zu, insbesondere ob die Kreiselhöhe des Schwadkreisels 4 oder der Schwadkreisel 4 zu gering eingestellt ist.

Alternativ oder zusätzlich kann mittels eines akustischen Sensors 19 die eingestellte Kreiselhöhe überwacht werden. So kann ein durch Berührung der Rechzinken 8 mit der Oberfläche des Bodens erzeugtes Geräusch, ein sogenanntes Bodenkratzen, erfasst werden, was auf eine zu tief gewählte Einstellung des Schwadkreisels 4 oder der Schwadkreisel 4 schließen lässt.

Alternativ oder zusätzlich kann durch eine Überwachung des Drehmoments zum Antreiben des jeweiligen Schwadkreisels 4 auf das Abbrechen von Rechzinken 8 oder den Verlust eines und/oder mehrerer Rechzinken 8 geschlossen werden. Hierzu kann das Auftreten einer Unwucht als Indikator für den Verlust herangezogen werden.

Das optische Erfassen von Rechzinken 8 mittels an den Schwadkreiseln angeordneter Kameras 20 kann auch der Verschleißdetektion dienen. Mittels der generierten Bilddaten BD der Rechzinken 8 kann deren Länge überwacht werden. Eine verschleißbedingte Änderung der Länge der Rechzinken 8 kann eine Verringerung der eingestellten Kreiselhöhe des jeweiligen Schwadkreisels 4 erfordern. Ebenso kann die verschleißbedingte Änderung der Länge der Rechzinken 8 den Austausch erforderlich werden lassen.

Neigungsdaten als physikalische Daten PD eines als Neigungswinkelsensor ausgeführten Sensors 19 zur Erfassung der Neigung des Schwadkreisels 4 können beispielsweise zusammen mit die Bodenkontur vor dem Schwadkreisel 3 wiedergebenden Bilddaten BD verarbeitet werden, um die eingestellte Neigung zu überwachen.

Druckdaten als physikalische Daten PD eines als Drucksensors ausgeführten Sensors 19 ermöglichen die Überwachung des durch ein hydraulisches Bodendruckentlastungssystem aufgebrachten Auflagedrucks von Schwadkreiseln 4, im dargestellten Ausführungsbeispiel der vorderen Schwadkreisel 4. Bei in ihrer Arbeitsbreite veränderlich angeordneten Schwadkreiseln 4 ist die Einhaltung eines konstanten Auflagedrucks unabhängig von der eingestellten Arbeitsbreite wesentlich, um eine optimale Bodenanpassung zu erreichen.

Die zumindest eine zu bestimmende Kenngröße 25 ist mittels der mit der Steuerungsvorrichtung 13 verbundenen Benutzerschnittstelle 15 auswählbar und/oder vorgebbar. Die zumindest eine Kenngröße 25 kann hierzu aus einer auswählbaren und/oder vorgebbaren Arbeitsstrategie abgeleitet werden. Als Arbeitsstrategie kann beispielsweise eine Optimierung der Bearbeitungsleistung, der Bearbeitungseffizienz und/oder der Bearbeitungsqualität durch den Bediener 16 vorgegeben bzw. ausgewählt werden.

Die Steuerungsvorrichtung 13 ist dazu eingerichtet, basierend auf der zumindest einen bestimmten Kenngröße 25 zumindest eine Einstellempfehlung 26 für den Betrieb des Kreiselschwaders 3 zu generieren. Die vom Bediener 16 vorgegebenen Betriebsparametern BP lassen sich in Abhängigkeit von der zumindest einen zu bestimmenden Kenngröße 25 durch die Steuerungsvorrichtung 13 optimieren und als Einstellempfehlungen 26 durch die Benutzerschnittstelle 15 ausgeben.

Die Steuerungsvorrichtung 13 kann dazu eingerichtet sein, eine auf der zumindest einen Einstellempfehlung 26 basierende Einstellung dialogbasierend durch einen manuellen Eingriff des Bedieners 16 des Kreiselschwaders 3 oder automatisch durch die Steuerungsvorrichtung 13 umzusetzen.

Des Weiteren kann die Steuerungsvorrichtung 13 dazu eingerichtet sein, in Abhängigkeit von der Einstellempfehlung 26 die vorzunehmende Einstellung dialogbasierend in Interaktion mit dem Bediener 16 durchzuführen. Bei einem manuellen Eingreifen durch den Bediener 16 kann die Steuerungsvorrichtung 13 dialogbasierend mit diesem interagieren, um die zumindest eine Einstellempfehlung 26 umzusetzen. Dabei können dem Bediener 16 zusätzliche Hinweise mittels der Benutzerschnittstelle 15 ausgegeben werden, welche den Betriebszustand und/oder das Arbeitsergebnis des Kreiselschwaders 3 charakterisierende Kenngröße 25 zu der zumindest einen Einstellempfehlung 26 geführt hat.

Die Steuerungsvorrichtung 13 kann dazu eingerichtet sein, mittels des Sensorsystems 18 erfasste physikalische Daten PD und/oder Bilddaten BD georeferenziert abzuspeichern. Alternativ oder zusätzlich kann weiterhin vorgesehen sein, dass die von dem Sensorfusionsmodul 22 zu wenigstens einem Datensatz 23 fusionierten physikalische Daten PD und Bilddaten BD georeferenziert abgespeichert werden. Ebenso kann die zumindest eine im Anschluss durch das Verarbeitungsmodul 24 aus dem wenigstens einen fusionierten Datensatz 23 bestimmte, den Betriebszustand und/oder das Arbeitsergebnis des Kreiselschwaders 3 charakterisierende Kenngröße 25 georeferenziert abgespeichert werden.

Das Überwachungssystem 14 überwacht den laufenden Betrieb des Kreiselschwaders 3, um die Einflüsse, welche das Arbeitsergebnis des Schwadprozesses beeinflussen, zu detektieren und erforderliche Anpassungen bei der Einstellung des Kreiselschwaders 3 ausgehend von den vorgegeben Betriebsparameter BP vorzuschlagen und/oder automatisch umzusetzen.

### Bezugszeichenliste

- 1: Landwirtschaftliche Kombination
- 2: Arbeitsmaschine
- 3: Kreiselschwader
- 4: Schwadkreisel
- 5: Kreiselachse
- 6: Stützrad
- 7: Zinkenarm
- 8: Rechzinken
- 9: Maschinegestell
- 10: Fahrgestell
- 11: Laufräder
- 12: Abtrieb
- 13: Steuerungsvorrichtung
- 14: Überwachungssystem
- 15: Benutzerschnittstelle
- 16: Bediener
- 17: Datenquelle
- 18: Sensorsystem
- 19: Sensor
- 20: Kamera
- 21: Bildauswertungsmodul
- 22: Sensorfusionsmodul
- 23: Datensatz
- 24: Verarbeitungsmodul
- 25: Kenngröße
- 26: Einstellempfehlung

- BD: Bilddaten
- BP: Betriebsparameter
- PD: Physikalische Daten

## Patentansprüche

1. Überwachungssystem (14) für einen Kreiselschwader (3) mit mindestens einem Schwadkreisel (4), der an Zinkenarmen (7) gelagerte Rechzinken (8) zur Erzeugung eines Schwads aus abgemähtem Erntegut aufweist, wobei das Überwachungssystem (14) eine Steuerungsvorrichtung (13) mit einer Benutzerschnittstelle (16) aufweist, welche zur Einstellung von Betriebsparametern (BP) des Kreiselschwaders (3) eingerichtet ist, **dadurch gekennzeichnet, dass** das Überwachungssystem (14) ein dem Kreiselschwader (3) zugeordnetes Sensorsystem (18) mit zumindest zwei Sensoren (19, 20) umfasst, welches dazu eingerichtet ist, den Betriebszustand wiedergebende physikalische Daten (PD) und Bilddaten (BD) des Kreiselschwaders (3) zu generieren und an die Steuerungsvorrichtung (13) zur Auswertung zu übertragen, wobei die Steuerungsvorrichtung (13) dazu eingerichtet ist, die physikalischen Daten (PD) und Bilddaten (BD) mittels eines Sensorfusionsmoduls (22) zu wenigstens einem Datensatz (23) zu fusionieren und mittels eines Verarbeitungsmoduls (24) aus dem wenigstens einen fusionierten Datensatz (23) zumindest eine den Betriebszustand und/oder das Arbeitsergebnis des Kreiselschwaders (3) charakterisierende Kenngröße (25) zu bestimmen.

2. Überwachungssystem (14) nach Anspruch 1, **dadurch gekennzeichnet, dass** die physikalischen Daten (PD) aus der Gruppe Akustikdaten, Schwingungsdaten und/oder Drehmomentdaten sind, zu deren Erfassung das Sensorsystem (18) eingerichtet und ausgeführt ist.

3. Überwachungssystem (14) nach Anspruch 1 oder 2, **dadurch gekennzeichnet, dass** die physikalischen Daten (PD) aus der Gruppe Druckdaten, Neigungswinkeldaten und/oder Bewegungsdaten des Kreiselschwaders (3) sind, zu deren Erfassung das Sensorsystem (18) eingerichtet und ausgeführt ist.

4. Überwachungssystem (14) nach einem der Ansprüche 1 bis 3, **dadurch gekennzeichnet, dass** die Bilddaten (BD) Aufnahmen des Kreiselschwaders (3), Komponenten (7, 8) des Kreiselschwaders (3) und/oder des vom Kreiselschwader (3) bearbeiteten Erntegutes umfassen, welche das Sensorsystem (18) vor, während und/oder nach der Bearbeitung durch den Kreiselschwader (3) generiert.

5. Überwachungssystem (14) nach einem der Ansprüche 1 bis 4, **dadurch gekennzeichnet, dass** das Verarbeitungsmodul (22) in der Steuerungsvorrichtung (13) hinterlegte oder hinterlegbare geometrische Daten des Kreiselschwaders (3) berücksichtigt.

6. Überwachungssystem (14) nach einem der vorangehenden Ansprüche, **dadurch gekennzeichnet, dass** die zumindest eine zu bestimmende Kenngröße (25) ein Verschmutzungsgrad des Erntegutes, ein Räumgrad des Erntegutes, ein Grasnabenzustand und/oder ein Verschleißzustand des Kreiselschwaders (3) oder seiner Komponenten (7, 8) ist.

7. Überwachungssystem (14) nach einem der vorangehenden Ansprüche, **dadurch gekennzeichnet, dass** die zumindest eine zu bestimmende Kenngröße (25) mittels der mit der Steuerungsvorrichtung (13) verbundenen Benutzerschnittstelle (15) auswählbar und/oder vorgebbar ist.

8. Überwachungssystem (14) nach einem der vorangehenden Ansprüche, **dadurch gekennzeichnet, dass** die Steuerungsvorrichtung (13) ein Bildauswertungsmodul (21) aufweist, welches dazu eingerichtet ist, die Bilddaten (BD) mittels eines Maschinenlernalgorithmus zu analysieren.

9. Überwachungssystem (14) nach einem der vorangehenden Ansprüche, **dadurch gekennzeichnet, dass** die Steuerungsvorrichtung (13) dazu eingerichtet ist, basierend auf der zumindest einen bestimmten Kenngröße (25) zumindest eine Einstellempfehlung (26) für den laufenden Betrieb des Kreiselschwaders (3) zu generieren.

10. Überwachungssystem (14) nach Anspruch 9, **dadurch gekennzeichnet, dass** die Steuerungsvorrichtung (13) dazu eingerichtet ist, die zumindest eine Einstellempfehlung (26) mittels der Benutzerschnittstelle (15) auszugeben.

11. Überwachungssystem (14) nach Anspruch 9 oder 10, **dadurch gekennzeichnet, dass** die Steuerungsvorrichtung (13) dazu eingerichtet ist, eine auf der zumindest einen Einstellempfehlung (26) basierende Einstellung dialogbasierend durch einen manuellen Eingriff eines Bedieners (16) des Kreiselschwaders (3) oder automatisch durch die Steuerungsvorrichtung (13) umzusetzen.

12. Überwachungssystem (14) nach Anspruch 11, **dadurch gekennzeichnet, dass** die Steuerungsvorrichtung (13) dazu eingerichtet ist, in Abhängigkeit von der Einstellempfehlung (26) die vorzunehmende Einstellung dialogbasierend in Interaktion mit dem Bediener (16) durchzuführen.

13. Überwachungssystem (14) nach einem der vorangehenden Ansprüche, **dadurch gekennzeichnet, dass** die Steuerungsvorrichtung (13) dazu eingerichtet ist, mittels des Sensorsystems (18) erfasste physikalische Daten (PD) und/oder Bilddaten (BD) georeferenziert abzuspeichern.

14. Kombination (1) aus einer landwirtschaftlichen Arbeitsmaschine (2), insbesondere Traktor, und einem Kreiselschwader (3), wobei die Kombination (1) ein Überwachungssystem (14) zur Überwachung des Betriebs des Kreiselschwaders (3) aufweist, welches nach einem der Ansprüche 1 bis 13 ausgeführt ist.

15. Verfahren zum Überwachen des Betriebs eines Kreiselschwaders (3) mittels eines Überwachungssystems (14), wobei der Kreiselschwader (3) mindestens einen Schwadkreisel (4) umfasst, welcher an Zinkenarmen (7) gelagerte Rechzinken (8) zur Erzeugung eines Schwads aus abgemähtem Erntegut aufweist, wobei das Überwachungssystem (14) mit einer Steuerungsvorrichtung (13) und einer Benutzerschnittstelle (15) ausgeführt ist, mittels der Betriebsparameter (BP) des Kreiselschwaders (3) eingestellt werden, **dadurch gekennzeichnet, dass** durch eine dem Kreiselschwader (2) zugeordnete, zumindest zwei Sensoren (19, 20) aufweisendes Sensorsystem (18) den Betriebszustand wiedergebende physikalische Daten (PD) und Bilddaten (BD) des Kreiselschwaders (3) generiert und an die Steuerungsvorrichtung (13) zur Auswertung übertragen werden, wobei die physikalischen Daten (PD) und Bilddaten (BD) mittels eines Sensorfusionsmoduls (22) der Steuerungsvorrichtung (13) zu wenigstens einem Datensatz (23) fusioniert werden und mittels eines Verarbeitungsmoduls (24) der Steuerungsvorrichtung (13) aus dem wenigstens einen fusionierten Datensatz (23) zumindest eine den Betriebszustand und/oder das Arbeitsergebnis des Kreiselschwaders (3) charakterisierende Kenngröße (25) bestimmt wird.
